# EUROPEAN PATENT SPECIFICATION

(11) **EP 1 481 317 B1**
(45) Date of publication and mention of the grant of the patent: **04.10.2006**
(21) Application number: 03702954.3
(22) Date of filing: 25.02.2003
(51) Int. Cl.: G06F 5/06

(54) **SHARED QUEUE FOR MULTIPLE INPUT-STREAMS**
GEMEINSAME WARTESCHLANGE FÜR MEHRERE EINGANGSTRÖME
FILE D'ATTENTE PARTAGEE POUR FLUX D'ENTREE MULTIPLES

(30) Priority: 27.02.2002 US 86096
(43) Date of publication of application: 01.12.2004
(73) Proprietor: Koninklijke Philips Electronics N.V., 5621 BA Eindhoven (NL)
(72) Inventor: ANAND, Vishal, NL-5656 AA Eindhoven (NL); ALAMPALLY, Rama, K., NL-5656 AA Eindhoven (NL)
(74) Representative: Eleveld, Koop Jan
(86) International application number: PCT/IB2003/000743
(87) International publication number: WO 2003/073296

(56) References cited:
- GB-A- 2 349 296
- US-A- 5 233 603
- CHIUSSI F M ET AL: "Backpressure in shared-memory-based ATM switches under multiplexed bursty sources" PROCEEDINGS OF IEEE INFOCOM 1996. CONFERENCE ON COMPUTER COMMUNICATIONS. FIFTEENTH ANNUAL JOINT CONFERENCE OF THE IEEE COMPUTER AND COMMUNICATIONS SOCIETIES. NETWORKING THE NEXT GENERATION. SAN FRANCISCO, MAR. 24 - 28, 1996, PROCEEDINGS OF INFOCOM, L, vol. 2 CONF. 15, 24 March 1996 (1996-03-24), pages 830-843, XP010158148 ISBN: 0-8186-7293-5
- KAROL M J ET AL: "Performance of hierarchical multiplexing in ATM switch design" DISCOVERING A NEW WORLD OF COMMUNICATIONS. CHICAGO, JUNE 14 - 18, 1992. BOUND TOGETHER WITH B0190700, VOL. 3, PROCEEDINGS OF THE INTERNATIONAL CONFERENCE ON COMMUNICATIONS, NEW YORK, IEEE, US, vol. 4, 14 June 1992 (1992-06-14), pages 269-275, XP010062145 ISBN: 0-7803-0599-X

## Description

This invention relates to the field of computer and communications systems, and in particular to a system that receives multiple input-streams that are routed to a common output port.

Multiple-input, common-output systems are common in the art. Multiple hosts, for example, may communicate data to a common server; multiple processors may access a common memory device; multiple data streams may be routed to a common transmission media; and so on. Generally, the input to the multiple-input system is characterized by bursts of activities from one or more input-streams. During these bursts of activities, the arrival rate of input data generally exceeds the allowable departure rate of the data to a subsequent receiving system, and buffering must be provided to prevent a loss of data.

Conventionally, one of two types of systems are employed to manage the routing of multiple input-streams to a common output, dependent upon whether the design priority is maximum memory-utilization efficiency, or maximum performance.

In a memory-efficient embodiment, a common buffer is provided for queuing the data from the input-streams, and each process that is providing an input-stream controls access to this common buffer, in accordance with a given control protocol. Data is unloaded from this common buffer to provide the common output. Because a common buffer is used to receive the flow from the various input-streams, the size of the buffer can be optimized for a given aggregate arrival rate. That is, because it is extremely unlikely that all input-streams will be active contemporaneously, the common buffer is sized substantially smaller than the size required to accommodate maximum flow from all streams simultaneously. The performance of such an embodiment, however, is dependent upon the poorest performing process that is providing an input-stream, because a poor process can tie up the common buffer while all of the other processes await access to the common buffer.

A multiple-input queuing system of this type is disclosed in US patent No. 5,233,603. The system contains a single buffer memory connected to multiple input and output lines. A multiplexer and a de-multiplexer connect the input and output lines to the memory. Different memory areas are provided for different inputs and outputs. In another embodiment this patent discloses the use of different memory elements, each connected to a different, predetermined output line. The input lines access these memory elements via a shared bus. In yet another embodiment a separate buffer memory is used for each combination of an input and an output line.

GB-A-2349296 discloses a network switch with a multiple-input, single-output buffering system. For each input a predetermined buffer memory is provided.

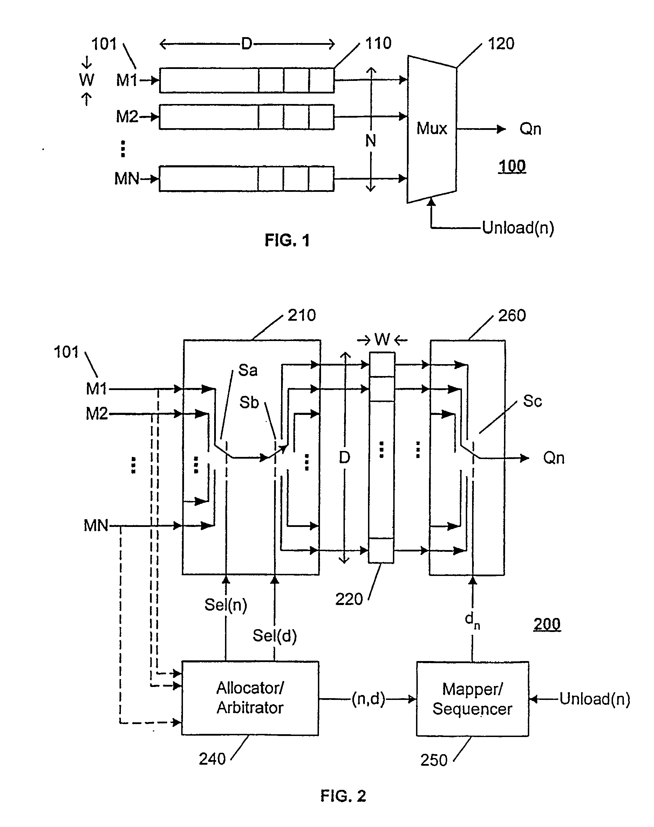

To maintain independence among processes that are providing the multiple inputs, conventional high-performance multiple-input systems typically employ multiple input buffers, as illustrated by system 100 of Fig. 1. Each buffer 110 provides a queue for receiving data from its corresponding input-stream 101. In the example of Fig. 1, a receiving system asserts an "Unload(n)" command to select the next-available data-item from the n^{th} queue, and this selected data-item Qₙ is subsequently communicated to the receiving system. The selection of the particular input data stream, n, is typically effected based on a prioritization scheme. Not illustrated, the system 100 typically includes a means for notifying the receiving system that data from an input-stream is available, and the receiving system selects from among the available streams based on a priority that is associated with the stream. Alternative protocols for controlling the flow of data from a plurality of input-streams are commonly employed, including, for example, transmission control in the system 100 and a combination of transmission and reception control by the system 100 and the receiving system, respectively. In like manner, the selection of the particular input-stream may include any of a variety of schemes, including a first-in-first-out selection, a round-robbin selection, and so on, in addition to, or in lieu of, the aforementioned priority scheme.

The design choices for a multiple-input system include a choice of the size, D, of the input queues. Based on the estimated input and output flow rates, a queue size D can be determined to minimize the likelihood of an overflow of the queue. For ease of understanding, the queues associated with each input-stream 101 of system 100 are illustrated as being similarly sized. If it known that a particular input-stream has a flow rate that substantially differs from the other input-streams, it may be allocated a smaller or larger queue size. As illustrated, the system 100 is configured to allow a maximum burst of D data-items from any of the input-streams, based on the expected processing speed of the subsequent receiving system. Queuing theory techniques are common in the art for determining an optimal value of D, given an expected distribution of arrivals of data-items at any input-stream and an expected distribution of removals of the data-items by the subsequent receiving system.

Because the queue size D is based on estimated arrival rates of data-items from each input-stream, each queue is sized to accommodate a worst-case estimate of arrivals. Although a particular input-stream may frequently come near to filling its queue, the likelihood of all of the input-streams simultaneously coming near to filling all of their queues is generally extremely low. Viewed another way, the number of unused memory locations among all of the queues at any given time is generally extremely high, and thus the memory-utilization efficiency of the conventional multiple-queue multiple-input system 100 is extremely low.

It is an object of this invention to provide a multiple-input device and method that maximizes memory-utilization efficiency. It is a further object of this invention to provide a multiple-input device and method that maximizes memory-utilization efficiency while maintaining a high performance. It is a further object of this invention to provide a high-performance multiple-input device that minimizes the area consumed by memory devices.

These objects, and others, are achieved by providing a multiple-input queuing system according to Claim 1. To allow for an independently controlled unloading of the individual data-items from the multiple-input common buffer, the system maintains a mapping of the memory locations of the buffer that is allocated to each data-item in each input-stream. To minimize the memory and overhead associated with maintaining a mapping of each data-item, memory locations that are allocated to each input-stream are maintained in a sequential, first-in, first-out queue. When a subsequent receiving device acknowledges that it is ready to receive a data-item from a particular input-stream, the identification of the allocated memory location is removed from the input-stream's queue, and the data-item that is at the allocated memory in the common buffer is provided to the receiving device.

The invention is explained in further detail, and by way of example, with reference to the accompanying drawings wherein:
Fig. 1 illustrates an example block diagram of a prior art multiple-input queuing system.
Fig. 2 illustrates an example block diagram of a multiple-input queuing system in accordance with this invention.
Fig. 3 illustrates an example block diagram of a multiple-input queuing system

Fig. 2 illustrates an example block diagram of a multiple-input queuing system 200 in accordance with this invention. The system 200 includes a dual-port memory 220, wherein writes to the memory 220 are controlled by an allocator/arbitrator 240 (hereinafter allocator 240), and reads from the memory 220 are controlled by a mapper/sequencer 250 (hereinafter mapper 250). The write and read processes to and from the memory 220 are symbolically represented by switch 210 and switch 260, respectively.

As illustrated in Fig. 2, the memory 220 includes P addressable memory-elements, and each memory-element is of sufficient width W to contain a data-item from any of the input-streams 101. Using conventional queuing theory techniques, the number P of memory-elements required to provide a given level of confidence in avoiding an overflow of the memory 220 can be determined, based on the expected input and output flow rates, as discussed above with regard to the prior art system 100 of Fig. 1. Preferably, the parameter P in system 200 is at least as large as parameter D in system 100. Note, however, that the system 100 includes a total of N*D memory-elements of width W, whereas the memory 220 includes a total of P memory-elements of width W.

The allocator 240 is configured to provide the location of a currently-unused memory-element within the memory 220, to which the next data-item from the input-streams 101 is directed, as indicated by output switch Sb in the switch 210. As indicated by the dashed lines between the input-streams 101 and the allocator 240, the allocator 240 is configured to receive a notification whenever an input-stream 101 has a new data-item to be transmitted. In a preferred embodiment, the allocator 240 includes arbitration logic, in the event that two or more input-streams 101 have data to transmit co-temporaneously. In a straightforward embodiment, for example, the input ports to the switch 210 may be assigned a sequentially ordered priority, the first port being of highest priority, the second port being of lesser priority, and so on. Each input-stream M1, M2, ... MN is physically connected to the particular port depending upon its priority. In such an example, the allocator 240 merely selects, via the input switch Sa, the lowest numbered port that has a data-item to be transmitted. Other priority schemes are common in the art, including dynamic prioritization based on the content of each data-item, or based on a prior history of transmissions from one or more of the input-streams 201, and others. Alternatively, a simple round-robin input selection scheme may be used, wherein the allocator 240 sequentially samples each input-stream 201 for new data, and routes the new data to the next-available unused memory-element in memory 220 in the order in which it is sampled. One of ordinary skill in the art will recognize that the particular scheme used to resolve potential conflicts among the variety of input-streams is independent of the principles of this invention.

Of note, and discussed further below, the allocator 240 is configured to note the removal of data-items from the individual memory-elements. As each data-item is removed, the memory-element that had contained this data-item is now available for receiving new data-items, as a currently-unused memory-element. An overflow of the memory 220 only occurs if all P memory-elements are filled with data-items that have not yet been removed.

Because any input-stream has access to any currently-unused memory-element in the memory 220, the system 100 exhibits the memory-utilization efficiency of the common-buffer system discussed in the Background of The Invention. However, because the allocator 240 is configured to allocate each available memory-element as required, the system 200 is not dependent upon a control of the memory 220 by one or more of the processes that are providing the input-streams.

Further, because the allocation and arbitration functions of the allocator 240, and in particular the allocator's interactions with the switch 210 are substantially independent of the processes that provide the input-streams 101, modifications to the allocator 240 and switch 210 can be effected without requiring changes to the processes that provide the input-streams 101. For example, to improve performance and reduce the likelihood of conflicts among the input-streams 101, the switch 210 may be configured to allow for the simultaneous routing of multiple data-items to multiple memory-elements in the memory 220. That is, switch Sa is illustrated in Fig. 2 as an N-to-1 switch and switch Sb as a 1-to-P switch. Alternatively, to support up to k simultaneous transfers, switches Sa and Sb may be N-to-k and k-to P switches, respectively. Such a change, however, will be 'transparent' to the input-streams M1... MN, in that the processes that provide the data-items need not be modified to be compatible with an N-to-1 switch, as compared to an N-to-k switch.

The mapper 250 is configured to assure that data-items are unloaded/removed from the memory 220 in an appropriate order. If the sequence of output data-items Qn is intended to correspond to the same sequence that the data-items are received, the mapper 250 need merely operate using the same sequence that is applied to control switch Sb in switch 210. That is, for example, if the switch Sb operates to sequentially select memory-elements in memory 220, the mapper 260 would also be configured to sequentially select the memory-elements in memory 220 for communication to a subsequent receiving system. Typically, however, the system 200 is configured to allow the subsequent receiving system to receive data-items in a somewhat independent manner.

In a typical embodiment, as discussed above in the Background of the Invention, the receiving system calls for data-items in a sequence that may differ from the sequence in which the data-items are received at the multiple-input queuing system 200. In a preferred embodiment, the system 200 is configured to allow the receiving system to specify the input-stream, n, from which the next data-item is to be sent. In this manner, for example, a process at an input-stream n may initiate a request to send m data-items to the receiving system, and the receiving system subsequently sends m "unload(n)" commands to the queuing system 200 to receive these m data-items, independent of the arrival of other data-items at system 200 from the other input-streams 101. That is, relative to each input-stream, the data-items are provided to receiving system in sequence, but the receiving system may call for the data-items from select input-streams independent of the order of arrival of data-items from other input-streams.

To allow the receiving system to request a sequence of data-items from a select input-stream, the allocator 240 communicates the allocation of each memory-element location, p, to each input-stream, n, as a stream-element pair (n,p), to the mapper 250. The mapper 250 thereby maintains a list of each memory-element location indicator, pₙ, that is sequentially assigned to each arriving data-item from each input-stream, n. When the receiving system requests the "next" data-item from a particular input-stream, n, the mapper 250 extracts the next location indicator, pₙ, from the list associated with the input-stream n, and uses that location indicator pₙ to provide the contents of the memory-element p as the output Qn, via the switch 260. This location indicator pₙ is removed from the list associated with the input-stream n, and the allocator 240 thereafter includes the memory-element p as a currently-unused memory location.

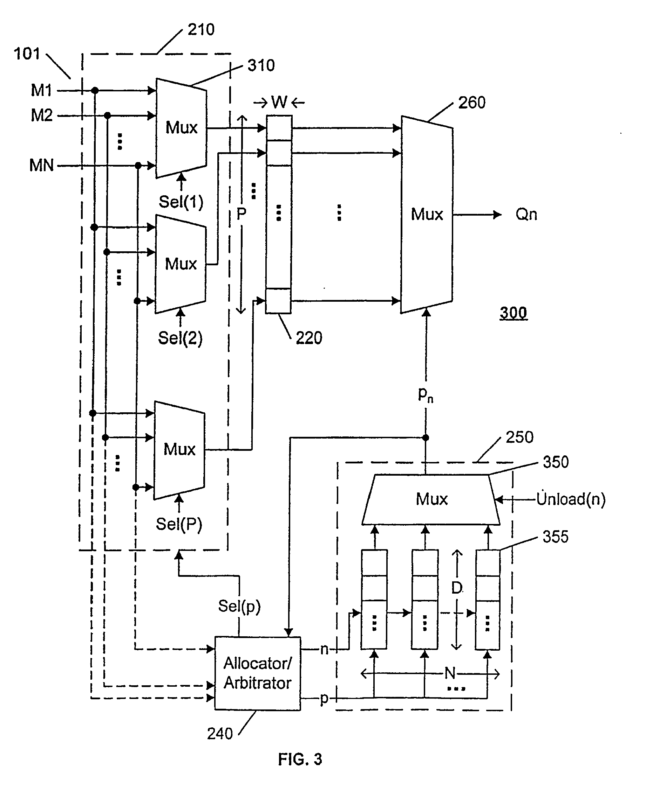

Fig. 3 illustrates an example block diagram of a multiple-input queuing system 300 with a multiple-queue memory-allocation map in accordance with this invention, as would be suitable for use as a mapper 250 in the system 200 of Fig. 2. Other embodiments of a mapper 250 will be evident to one of ordinary skill in the art in view of this disclosure.

In the example embodiment of Fig. 3, the mapper 250 includes multiple first-in-first-out (FIFO) queues 355, each queue 355 being associated with a corresponding input-stream 101 to the multiple-input queuing system 300. When the allocator 240 allocates a memory-element p to an input-stream n, the address of this memory-element, p, is stored in the queue corresponding to input-stream n, the index n being used to select the queue 355 corresponding to input-stream n. As each new data-item is received from an input-stream, the address, p, at which the data-item is stored, is stored in the queue corresponding to the input-stream, in sequential order.

Each queue 355 in the example mapper 250 of Fig. 3 is illustrated as having a queue-length of D, consistent with the prior art queue lengths illustrated in Fig. 1. Note, however, that the width of the queues 110 of Fig. 1 is W, so that the total size of each queue 110 is D*W. Because each queue 355 of Fig. 3 is configured to store an address to the P memory-elements, the total size of each queue 355 is D*log₂P. In a typical embodiment, the width of the address, log₂P is generally substantially less than the width of a data-item. For example, if the data-items are 32-bits wide, and the buffer 220 is configured to hold 1024 data-items (log₂(1024)=10), the queues 355 of Fig. 3 will be less than a third (10/32) of the size of the buffers 110 of Fig. 1.

When the receiving system requests the next data-item from a select input-stream, via an "Unload(n)" command, a multiplexer/selector 350 selects the queue corresponding to the select input-stream, n, and the next available index, pₙ, is removed from the select queue 355. The index pₙ is used to select the corresponding memory-element p, via that switch/multiplexer 260, to provide the output Qn corresponding to the Unload(n) request from the receiving system. After the data-item in the memory-element p is selected for output, the allocator 240 includes the memory-element p as a currently-unused memory-element, thereby allowing it to be allocated to newly arriving data-items, as required.

Also illustrated in Fig. 3 is an example embodiment of a multiple-input, multiple-output, switch 210 that is configured to route a data-item from an input-stream 101 to a selected memory-element, p, in a memory 220. The example switch 210 includes a multiplexer/selector 310 corresponding to each memory-element of the memory 220, that is enabled via a select(np) command from the allocator 240. In this example embodiment, each multiplexer/selector 310 associated with each memory-element is configured to receive a select(np) command, wherein nₚ identifies the select input-stream that has been allocated to the memory-element. In this manner, the data-item from the n^{th} input-stream is routed to the p^{th} memory-element. Note that this example embodiment allows for the storage of data-items from multiple co-temporaneous input-streams. That is, for example, if input-streams 1, 3, and 7 are currently attempting to transmit data-items, and memory-elements 2, 8, and 13 (and, perhaps others) are currently-unused, the allocator 240 in a preferred embodiment will assert select(1), select(3), and select(7) commands to the multiplexers 310 that are associated with memory-elements 2, 8, and 13, respectively, thereby simultaneously routing input-stream 1 to multiplexer/selector 310 corresponding to each memory-element of the memory 220, that is enabled via a select(nₚ) command from the allocator 240. In this example embodiment, each multiplexer/selector 310 associated with each memory-element is configured to receive a select(nₚ) command, wherein nₚ identifies the select input-stream that has been allocated to the memory-element. In this manner, the data-item from the n^{th} input-stream is routed to the p^{th} memory-element. Note that this example embodiment allows for the storage of data-items from multiple co-temporaneous input-streams. That is, for example, if input-streams 1, 3, and 7 are currently attempting to transmit data-items, and memory-elements 2, 8, and 13 (and, perhaps others) are currently-unused, the allocator 240 in a preferred embodiment will assert select(1), select(3), and select(7) commands to the multiplexers 310 that are associated with memory-elements 2, 8, and 13, respectively, thereby simultaneously routing input-stream 1 to memory-element 2, input-stream 3 to memory-element 8, and input-stream 7 to memory-element 13.

Alternative methods for routing data-items from multiple input-streams to allocated memory locations will be evident to one of ordinary skill in the art in view of this disclosure. For example, Fig. 3 illustrates an N-to-1 multiplexer 310 associated with each memory-element of the buffer 220, to select from among N input-streams; in an alternative embodiment, a 1-to-P selector may be associated with each input-stream 101, to route each input-stream to a selected memory-element of the buffer 220.

## Claims

1. A multiple-input queuing system (200) comprising:
inputs (101) for receiving a plurality of input-streams (M1-MN);
a buffer (220) that includes a plurality of memory-elements,
an allocator (240) that is configured to allocate memory-elements of the plurality of memory-elements to respective selected input streams from a plurality of input-streams (M1-MN), for storing data-items from the selected input-streams; and
a mapper (250) that is configured to:
receive a request (Unload(n)) for an output corresponding to the selected input-stream,
determine an address (dₙ) associated with the memory-element, based on the request for the selected input-stream, and
provide the data-item from the memory-element as the output (Qn), based on the address associated with the memory-element, **characterized in that** the queuing system comprises:
- a switch (210), coupled between the inputs and the memory elements, and having a control input coupled to the allocator (240), the switch being configured to route the data-items simultaneously from a plurality of the selected input-streams to a plurality of the allocated memory-elements.

2. The multiple-input queuing system (200) of claim 1, further including a second switch (260), operably coupled to the mapper (250), the second switch being configured to route the data-item from the memory-element to the output.

3. The multiple-input queuing system (200) of claim 1, wherein the allocator (240) is further configured to allocate the memory-element based on a request from the selected input-stream for an allocation.

4. The multiple-input queuing system (200) of claim 3, wherein the allocator (240) is further configured to:
receive allocation requests from other input-streams of the plurality of input-streams (M1-MN),
determine a relative priority of the allocation requests from the other input-streams and the request from the selected input-stream, and
identify the selected input-stream, based on the relative priority.

5. The multiple-input queuing system (200) of claim 3, wherein the allocator (240) is further configured to:
receive allocation requests from other input-streams of the plurality of input-streams (M1-MN), and
allocate other memory-elements of the plurality of memory-elements for storing other data-items from the other input-streams.

6. The multiple-input queuing system (200) of claim 5, wherein the allocator (240) is configured to allocate the other memory-elements contemporaneously with allocating the memory-element for storing the data-item from the selected input-stream.

7. The multiple-input queuing system (200) of claim 5, wherein the mapper (250) is further configured to:
receive requests for outputs corresponding to the other input-streams,
determine addresses associated with the other memory-elements, based on the request for the other input-streams, and
provide the other data-items from the other memory-element as outputs from the multiple-input queuing system (200), based on the addresses associated with the other memory-element.

8. A multiple-input queuing system (200) according to Claim 1, wherein the switch (210) comprises
a plurality of input-multiplexers (310), each input-multiplexer being coupled to a memory-element of the plurality of memory-elements (220).

9. A multiple-input queuing system (200) according to Claim 8, the buffer system (300) further including:
a mapper (250), operably coupled to the allocator (240), the mapper including:
a memory (355) that is configured to store information corresponding to the allocation commands, and
a multiplexer (350), operably coupled to the memory (355), the multiplexer being configured to access the information corresponding to the allocation commands, and to thereby provide an identification of the one or more memory-elements corresponding to a selected input-stream of the plurality of input-streams (M1-MN), and
an output-multiplexer (260), operably coupled to the plurality of memory-elements (220) and to the mapper (250), the output-multiplexer being configured to couple a select memory-element of the plurality of memory-elements (220) to an output of the buffer system (300), based on the identification of the one or more memory-elements corresponding to the selected input-stream.

10. A multiple-input queuing system (200) according to Claim 9, wherein the memory (355) of the mapper (250) includes a plurality of queues, each queue of the plurality of queues corresponding to each input-stream of the plurality of input-streams (M1-MN).

11. A method of buffering data-items from a plurality of input-streams (M1-MN), including:
receiving an input-notification from one or more input-streams of the plurality of input-streams (M1-MN),
allocating (240) selected memory elements of a plurality of memory-elements (220) to respective ones input-stream of the one or more input-streams,
configuring a switch (210) to allow for routing of received data items from the input streams to the allocated selected memory elements,
storing (220) the received data-items from the selected input-stream to the selected memory-elements,
storing (250) an identification of the selected memory-elements corresponding to the selected input-streams,
receiving an unload request (Unload(n)) that identifies an identified one of the selected input-stream (n), and
providing the received data-item from the selected memory-element, allocated to the identified one of the input streams, based on an identification (dₙ) of the selected memory-element corresponding to the identified one of the input-streams (n), **characterized in that** the switch (210) is configured to simultaneously route received data items from the input streams to the plurality of memory elements.

12. The method of claim 11, further including:
allocating a plurality of selected memory-elements of the plurality of memory-elements (220) to a plurality of selected input-streams of the one or more input-streams,
storing a received data-item from each of the plurality of selected input-streams to a corresponding each of the plurality of selected memory-elements, and
storing an identification of each of the plurality of selected memory-elements corresponding to each of the plurality of selected input-streams.

13. The method of claim 11, wherein:
storing (250) the identification of the selected memory-element includes:
placing the identification in a first-in-first-out queue (355) that is associated with the selected input-stream, and
providing the received data-item includes:
removing the identification from the first-in-first-out queue that is associated with the selected input-stream.

14. The method of claim 11, wherein:
each memory-element of the plurality of memory-elements (220) is dynamically classifiable as currently-used and currently-unused;
allocating the selected memory-element includes:
identifying one of the plurality of memory-elements (220) that is classified as currently-unused as the selected memory-element, and
classifying the selected memory-element as currently-used; and providing the received data-item includes:
classifying the selected memory-element as currently-unused.

## Patentansprüche

1. Warteschlangeneinreihungssystem (200) mit mehreren Eingängen, umfassend:
Eingänge (101) zum Empfangen mehrerer Eingangsströme (M1-MN),
einen Puffer (220), der mehrere Speicherelemente umfasst,
eine Zuordnungsvorrichtung (240), die dafür konfiguriert ist, Speicherelemente der mehreren Speicherelemente zu jeweiligen ausgewählten Eingangsströmen von mehreren Eingangsströmen (M1-MN) zuzuordnen, um Datenelemente von den ausgewählten Eingangsströmen zu speichern, und
eine Abbildungsvorrichtung (250), die dafür konfiguriert ist,
eine Anforderung (Unload(n)) für eine Ausgabe zu empfangen, die dem ausgewählten Eingangsstrom entspricht,
eine Adresse (dₙ), die dem Speicherelement zugeordnet ist, auf der Grundlage der Anforderung für den gewählten Eingangsstrom zu bestimmen, und
das Datenelement von dem Speicherelement auf der Grundlage der Adresse, die dem Speicherelement zugeordnet ist, als eine Ausgabe (Qn) bereitzustellen, **dadurch gekennzeichnet, dass** das Warteschlangeneinreihungssystem Folgendes umfasst:
- einen Schalter (210), der zwischen den Eingängen und den Speicherelementen angeschlossen ist und einen Steuerungseingang hat, der mit der Zuordnungsvorrichtung (240) verbunden ist, wobei der Schalter dafür konfiguriert ist, die Datenelemente gleichzeitig von mehreren der gewählten Eingangsströme zu mehreren der zugewiesenen Speicherelemente zu leiten.

2. Warteschlangeneinreihungssystem (200) mit mehreren Eingängen nach Anspruch 1, das des Weiteren einen zweiten Schalter (260) enthält, der mit der Abbildungsvorrichtung (250) wirkverbunden ist, wobei der zweite Schalter dafür konfiguriert ist, das Datenelement von dem Speicherelement zu dem Ausgang zu leiten.

3. Warteschlangeneinreihungssystem (200) mit mehreren Eingängen nach Anspruch 1, wobei die Zuordnungsvorrichtung (240) des Weiteren dafür konfiguriert ist, das Speicherelement auf der Grundlage einer von dem ausgewählten Eingangsstrom ergangenen Anforderung nach einer Zuordnung zuzuordnen.

4. Warteschlangeneinreihungssystem (200) mit mehreren Eingängen nach Anspruch 3, wobei die Zuordnungsvorrichtung (240) des Weiteren dafür konfiguriert ist:
Zuordnungsanforderungen von anderen Eingangsströmen der mehreren Eingangsströme (M1-MN) zu erhalten,
eine relative Priorität der Zuordnungsanforderungen von den anderen Eingangsströmen und der Anforderung von dem ausgewählten Eingangsstrom zu bestimmen, und
den ausgewählten Eingangsstrom auf der Grundlage der relativen Priorität zu identifizieren.

5. Warteschlangeneinreihungssystem (200) mit mehreren Eingängen nach Anspruch 3, wobei die Zuordnungsvorrichtung (240) des Weiteren dafür konfiguriert ist:
Zuordnungsanforderungen von anderen Eingangsströmen der mehreren Eingangsströme (M 1-MN) zu erhalten, und
weitere Speicherelemente der mehreren Speicherelemente zum Speichern weiterer Datenelemente von den weiteren Eingangsströmen zuzuordnen.

6. Warteschlangeneinreihungssystem (200) mit mehreren Eingängen nach Anspruch 5, wobei die Zuordnungsvorrichtung (240) dafür konfiguriert ist, die weiteren Speicherelemente gleichzeitig mit der Zuordnung des Speicherelements zum Speichern des Datenelements von dem ausgewählten Eingangsstrom zuzuordnen.

7. Warteschlangeneinreihungssystem (200) mit mehreren Eingängen nach Anspruch 5, wobei die Abbildungsvorrichtung (250) dafür konfiguriert ist:
Anforderungen nach Ausgaben entsprechend den weiteren Eingangsströmen entgegenzunehmen,
Adressen, die den weiteren Speicherelementen zugeordnet sind, auf der Grundlage der Anforderung nach den weiteren Eingangsströmen zu bestimmen, und
die weiteren Datenelemente von dem weiteren Speicherelement als Ausgaben von dem Warteschlangeneinreihungssystem (200) mit mehreren Eingängen auf der Grundlage der Adressen, die dem weiteren Speicherelement zugeordnet sind, bereitzustellen.

8. Warteschlangeneinreihungssystem (200) mit mehreren Eingängen nach Anspruch 1, wobei der Schalter (210) Folgendes umfasst:
mehrere Eingangs-Multiplexer (310), wobei jeder Eingangs-Multiplexer mit einem Speicherelement der mehreren Speicherelemente (220) verbunden ist.

9. Warteschlangeneinreihungssystem (200) mit mehreren Eingängen nach Anspruch 8, wobei das Puffersystem (300) des Weiteren Folgendes enthält:
eine Abbildungsvorrichtung (250), die mit der Zuordnungsvorrichtung (240) wirkverbunden ist, wobei die Abbildungsvorrichtung Folgendes enthält:
einen Speicher (355), der dafür konfiguriert ist, Informationen zu speichern, die den Zuordnungsbefehlen entsprechen, und
einen Multiplexer (350), der mit dem Speicher (355) wirkverbunden ist, wobei der Multiplexer dafür konfiguriert ist, auf die Informationen zuzugreifen, die den Zuordnungsbefehlen entsprechen, und **dadurch** eine Identifizierung des einen oder der mehreren Speicherelemente vorzunehmen, die einem ausgewählten Eingangsstrom der mehreren Eingangsströme (M1-MN) entsprechen, und
einen Ausgabe-Multiplexer (260), der mit den mehreren Speicherelementen (220) und mit der Abbildungsvorrichtung (250) wirkverbunden ist, wobei der Ausgabe-Multiplexer dafür konfiguriert ist, ein ausgewähltes Speicherelement der mehreren Speicherelemente (220) auf der Grundlage der Identifizierung des einen oder der mehreren Speicherelemente, die dem ausgewählten Eingangsstrom entsprechen, mit einem Ausgang des Puffersystems (300) zu verbinden.

10. Warteschlangeneinreihungssystem (200) mit mehreren Eingängen nach Anspruch 9, wobei der Speicher (355) der Abbildungsvorrichtung (250) mehrere Warteschlangen enthält, wobei jede Warteschlange der mehreren Warteschlangen jedem Eingangsstrom der mehreren Eingangsströme (M1-MN) entspricht.

11. Verfahren zum Puffern von Datenelementen von mehreren Eingangsströmen (M1-MN), das Folgendes enthält:
Empfangen einer Eingangsbenachrichtigung von einem oder mehreren Eingangsströmen der mehreren Eingangsströme (M1-MN),
Zuordnen (240) ausgewählter Speicherelemente von mehreren Speicherelementen (220) zu einem jeweiligen Eingangsstrom des einen oder der mehreren Eingangsströme,
Konfigurieren eines Schalters (210) dergestalt, dass ein Routen von empfangenen Datenelementen von den Eingangsströmen zu den zugeordneten ausgewählten Speicherelementen möglich ist,
Speichern (220) der empfangenen Datenelemente von dem ausgewählten Eingangsstrom in den ausgewählten Speicherelementen,
Speichern (250) einer Identifizierung der ausgewählten Speicherelemente, die den ausgewählten Eingangsströmen entsprechen,
Empfangen einer Entlade-Anforderung (Unload(n)), die einen identifizierten der ausgewählten Eingangsströme (n) identifiziert, und
Bereitstellen des empfangenen Datenelements von dem ausgewählten Speicherelement, das dem identifizierten der Eingangsströme zugeordnet ist, auf der Grundlage einer Identifikation (dₙ) des ausgewählten Speicherelements, das dem identifizierten der Eingangsströme (n) entspricht, **dadurch gekennzeichnet, dass** der Schalter (210) dafür konfiguriert ist, empfangene Datenelemente von den Eingangsströmen gleichzeitig zu den mehreren Speicherelementen zu leiten.

12. Verfahren nach Anspruch 11, das des Weiteren Folgendes enthält:
Zuordnen mehrerer ausgewählter Speicherelemente der mehreren Speicherelemente (220) zu mehreren ausgewählten Eingangsströmen des einen oder der mehreren Eingangsströme,
Speichern eines empfangenen Datenelements von jedem der mehreren ausgewählten Eingangsströme in einem entsprechenden der mehreren ausgewählten Speicherelemente, und
Speichern einer Identifikation jedes der mehreren ausgewählten Speicherelemente, die jedem der mehreren ausgewählten Eingangsströme entsprechen.

13. Verfahren nach Anspruch 11, wobei:
das Speichern (250) der Identifikation des ausgewählten Speicherelements Folgendes enthält:
Anordnen der Identifikation in einer First-in-First-out-Schlange (355), die dem ausgewählten Eingangsstrom zugeordnet ist, und
das Bereitstellen des empfangenen Datenelements Folgendes enthält:
Entfernen der Identifikation aus der First-in-First-out-Schlange, die dem ausgewählten Eingangsstrom zugeordnet ist.

14. Verfahren nach Anspruch 11, wobei:
jedes Speicherelement der mehreren Speicherelemente (220) dynamisch als momentan genutzt und momentan ungenutzt klassifizierbar ist,
das Zuordnen des ausgewählten Speicherelements Folgendes enthält:
Identifizieren eines der mehreren Speicherelemente (220), das als momentan ungenutzt klassifiziert ist, als das ausgewählte Speicherelement, und
Klassifizieren des ausgewählten Speicherelements als momentan genutzt, und
das Bereitstellen des empfangenen Datenelements Folgendes enthält:
Klassifizieren des ausgewählten Speicherelements als momentan ungenutzt.

## Revendications

1. Système de mise en file d'attente à entrées multiples (200) comprenant:
des entrées (101) pour recevoir plusieurs flux d'entrée (M1-MN);
un tampon (220) qui inclut plusieurs éléments de mémoire,
un allocateur (240) qui est configuré pour allouer les éléments de mémoire desdits plusieurs éléments de mémoire aux flux d'entrée respectifs sélectionnés parmi plusieurs flux d'entrée (M1-MN), pour stocker des éléments de données des flux d'entrée sélectionnés; et
un mappeur (250) qui est configuré pour:
recevoir une demande (Décharger(n)) d'une sortie correspondant au flux d'entrée sélectionné,
déterminer une adresse (dₙ) associée à l'élément de mémoire, sur base de la demande de flux d'entrée sélectionné, et
fournir l'élément de données de l'élément de mémoire comme la sortie (Qn), sur base de l'adresse associée à l'élément de mémoire, **caractérisé en ce que** le système de mise en file d'attente comprend:
un commutateur (210), couplé entre les entrées et les éléments de mémoire, et ayant une entrée de commande couplée à l'allocateur (240), le commutateur étant configuré pour router les éléments de données simultanément de plusieurs des flux d'entrée sélectionnés à plusieurs des éléments de mémoire alloués.

2. Système de mise en file d'attente à entrées multiples (200) selon la revendication 1, incluant de plus un deuxième commutateur (260), fonctionnellement couplé au mappeur (250), le deuxième commutateur étant configuré pour router l'élément de données de l'élément de mémoire vers la sortie.

3. Système de mise en file d'attente à entrées multiples (200) selon la revendication 1, dans lequel l'allocateur (240) est de plus configuré pour allouer l'élément de mémoire sur base d'une demande du flux d'entrée sélectionné pour une allocation.

4. Système de mise en file d'attente à entrées multiples (200) selon la revendication 3, dans lequel l'allocateur (240) est de plus configuré pour:
recevoir des demandes d'allocation d'autres flux d'entrée desdits plusieurs flux d'entrée (M1-MN),
déterminer une priorité relative des demandes d'allocation des autres flux d'entrée et la demande du flux d'entrée sélectionné, et
identifier le flux d'entrée sélectionné, sur base de la priorité relative.

5. Système de mise en file d'attente à entrées multiples (200) selon la revendication 3, dans lequel l'allocateur (240) est de plus configuré pour:
recevoir des demandes d'allocation d'autres flux d'entrée desdits plusieurs flux d'entrée (M 1-MN), et
allouer d'autres éléments de mémoire desdits plusieurs éléments de mémoire pour stocker d'autres éléments de données des autres flux d'entrée.

6. Système de mise en file d'attente à entrées multiples (200) selon la revendication 5, dans lequel l'allocateur (240) est configuré pour allouer les autres éléments de mémoire dans le même temps en allouant l'élément de mémoire pour stocker l'élément de donnée du flux d'entrée sélectionné.

7. Système de mise en file d'attente à entrées multiples (200) selon la revendication 5, dans lequel le mappeur (250) est de plus configuré pour:
recevoir des demandes de sorties correspondant aux autres flux d'entrée,
déterminer des adresses associées aux autres éléments de mémoire, sur base de la demande pour les autres flux d'entrée, et
procurer les autres éléments de données de l'autre élément de mémoire comme sorties du système de mise en file d'attente à entrées multiples (200), sur base des adresses associées à l'autre élément de mémoire.

8. Système de mise en file d'attente à entrées multiples (200) selon la revendication 1, dans lequel le commutateur (210) comprend
plusieurs multiplexeurs d'entrée (310), chaque multiplexeur d'entrée étant couplé à un élément de mémoire desdits plusieurs éléments de mémoire (220).

9. Système de mise en file d'attente à entrées multiples (200) selon la revendication 8, le système de tampon (300) comprenant de plus:
un mappeur (250), fonctionnellement couplé à l'allocateur (240), le mappeur incluant:
une mémoire (355) qui est configurée pour stocker de l'information correspondant aux commandes d'allocation, et
un multiplexeur (350), fonctionnellement couplé à la mémoire (355), le multiplexeur étant configuré pour accéder à l'information correspondant aux commandes d'allocation, et pour ainsi fournir une identification auxdits un ou plusieurs éléments de mémoire correspondant à un flux d'entrée sélectionné desdits plusieurs flux d'entrée (M1-MN), et
un multiplexeur de sortie (260), fonctionnellement couplé auxdits plusieurs éléments de mémoire (220) et au mappeur (250), le multiplexeur de sortie étant configuré pour coupler un élément de mémoire sélectionné desdits plusieurs éléments de mémoire (220) à une sortie du système de tampon (300), sur base de l'identification desdits un ou de plusieurs éléments de mémoire correspondant aux flux d'entrée sélectionnés.

10. Système de mise en file d'attente à entrées multiples (200) selon la revendication 9, dans lequel la mémoire (355) de l'allocateur (250) inclut plusieurs files, chaque file desdites plusieurs files correspondant à chaque flux d'entrée desdits plusieurs flux d'entrée (M1-MN).

11. Procédé de mise en tampon d'éléments de données de plusieurs flux d'entrée (M1-MN) incluant:
la réception d'une notification d'entrée d'un ou de plusieurs flux d'entrée desdits plusieurs flux d'entrée (M1-MN),
l'allocation (240) d'éléments de mémoire sélectionnés de plusieurs éléments de mémoire (220) aux flux d'entrée respectifs desdits un ou plusieurs flux d'entrée,
la configuration d'un commutateur (210) pour permettre le routage des éléments de données reçus des flux d'entrée aux éléments de mémoire sélectionnés alloués,
le stockage (220) des éléments de données reçus du flux d'entrée sélectionné aux éléments de mémoire sélectionnés,
le stockage (250) d'une identification des éléments de mémoire sélectionnés correspondant aux flux d'entrée sélectionnés,
la réception d'une demande de déchargement (Décharger(n)) qui identifie un flux identifié parmi les flux d'entrée sélectionnés (n), et
la fourniture de l'élément de données reçu de l'élément de mémoire sélectionné, alloué au flux identifié parmi les flux d'entrée, sur base d'une identification (dₙ) de l'élément de mémoire sélectionné correspondant au flux identifié parmi les flux d'entrée (n), **caractérisé en ce que** le commutateur (210) est configuré pour router simultanément les éléments de données reçus des flux d'entrée auxdits plusieurs éléments de mémoire.

12. Procédé selon la revendication 11, incluant de plus:
l'allocation de plusieurs éléments de mémoire sélectionnés desdits plusieurs éléments de mémoire (220) à plusieurs flux d'entrée sélectionnées desdits un ou plusieurs flux d'entrée,
le stockage d'un élément de données reçu de chacun desdits plusieurs flux d'entrée sélectionnés dans des éléments correspondant chacun auxdits plusieurs éléments de mémoire sélectionnés, et
le stockage d'une identification de chacun desdits plusieurs éléments de mémoire sélectionnés correspondant à chacun desdits plusieurs flux d'entrée sélectionnés.

13. procédé selon la revendication 11, dans lequel:
le stockage (250) de l'identification de l'élément de mémoire sélectionné inclut:
le placement de l'identification dans une file premier-entré-premier-sorti (355) qui est associée au flux d'entrée sélectionné, et
la fourniture de l'élément de données reçu inclut:
le retrait de l'identification de la file premier-entré-premier-sorti qui est associée au flux d'entrée sélectionné.

14. Procédé selon la revendication 11, dans lequel:
chaque élément de mémoire desdits plusieurs éléments de mémoire (220) est dynamiquement classifiable comme actuellement utilisé et actuellement inutilisé;
l'allocation de l'élément de mémoire sélectionné inclut:
l'identification d'un desdits plusieurs éléments de mémoire (220) qui est classifié comme actuellement inutilisé comme élément de mémoire sélectionné, et
la classification de l'élément de mémoire sélectionné comme couramment utilisé; et
la fourniture de l'élément de données reçu inclut:
la classification de l'élément de mémoire sélectionné comme couramment inutilisé.
